# EUROPÄISCHE PATENTSCHRIFT

(11) **EP 0 501 470 B1**
(45) Veröffentlichungstag und Bekanntmachung des Hinweises auf die Patenterteilung: **11.08.1993**
(21) Anmeldenummer: 92103350.2
(22) Anmeldetag: 27.02.1992
(51) Int. Cl.: F24D 3/16

(54) **Kapillarrohr-Heizanordnung**
Heating arrangement with capillary tubes
Dispositif de chauffage à tubes capillaires

(30) Priorität: 27.02.1991 DE 4106200
(43) Veröffentlichungstag der Anmeldung: 02.09.1992
(73) Patentinhaber: SANDLER ENERGIETECHNIK GMBH & CO KG, D-87600 Kaufbeuren (DE)
(72) Erfinder: Sandler, Martin, W-8950 Kaufbeuren (DE)
(74) Vertreter: Fricke, Joachim, Dr.

(56) Entgegenhaltungen:
- DE-A- 3 325 180
- FR-A- 2 507 758
- FR-A- 2 572 503

## Beschreibung

Die Erfindung betrifft eine Kapillar-Heizanordnung mit den Merkmalen des Oberbegriffs des Anspruchs 1 bzw. des Anspruchs 2.

Solche Kapillarrohr-Heizanordnungen sind bekannt (siehe z.B. FR-A-2 507 758). Die Rohre und Kapillarröhrchen sind aus Polypropylen mattenförmig hergestellt. Mit Hilfe von Fixierstegen können die Schenkel der flexiblen Röhrchen in einer annähernd parallelen gegenseitigen Lage zueinander gehalten werden, wobei die Fixierstege zugleich zur Befestigung der Matte an Wandflächen dienen können. Hierdurch können die Matten direkt auf einer Rohbauwand montiert und anschließend mit ca. 10 mm starkem Putz überdeckt werden. Die Matten können sowohl auf Fußbodenflächen, Wandflächen als auch an Deckenflächen angebracht werden. Die Verteil- und Sammelrohre von nebeneinander angeordneten Matten werden durch angeschweißte Verbindungsstücke oder einfache Steckverbindungen miteinander verbunden, so daß sich Heizflächen von abgestuften Ausmaßen herstellen lassen.

Es hat sich gezeigt, daß die Kapillarrohrmatten auf dem Bau durch unsachgemäße Handhabung, z.B. von Unbefugten, leicht beschädigt werden können. Auch ist die Verlegung, Montage und Verbindung von solchen Kapillarrohr-Heizmatten vor Ort personen- und zeitaufwendig.

Es ist Aufgabe der Erfindung eine solche Kapillarrohr-Heizanordnung so weiterzubilden, daß die einzelnen Kapillarrohr-Heizmatten während des Transportes, der Montage und gegenüber den weiteren Bauarbeiten weitgehend und zuverlässig gegen Verletzungen geschützt sind und die Verlegung und Montage wesentlich erleichtert wird.

Diese Aufgabe wird durch die Lehre des Anspruchs 1 bzw. die Lehre des Anspruchs 2 gelöst.

Die Tragplatte gemäß der Lahre nach Anspruch 1 kann z.B. aus einer 4 cm dicken, formstabilen und bruchfesten Hartschaumplatte bestehen, die leicht bearbeitet werden kann und bei geringem Gewicht eine gute Dämmwirkung aufweist. Aus ökologischen Gründen wird jedoch eine Holzfaserplatte oder dgl. bevorzugt, die ebenfalls bei ausreichender Dicke von z.B. 4 cm formstabil und bruchfest ist. Das Holzfasermaterial weist ebenfalls bei geringem Gewicht eine gute Dämmwirkung auf und läßt sich leicht bearbeiten.

Das Verteilrohr und das Sammelrohr einer Kapillarrohr-Heizmatte werden insgesamt und vollständig zusammen mit den Anschlußstellen der einzelnen Kapillarröhrchen in der Quernut der Tragplatte aufgenommen, wobei die Länge dieser Rohre geringer als die Breite der Tragplatte ist, so daß die vorzugsweise verschlossenen Enden der Rohre ebenfalls verdeckt in der Nut liegen. Die Kapillarröhrchen selbst liegen frei auf der Oberfläche der Tragplatte. Sie können auf der Tragplatte ausgerichtet und geheftet werden. Es ist jedoch auch möglich beim Auftragen der Füllschicht mit Hilfe eines zahn- oder kammähnlichen Aufstreichwerkzeuges die Schenkel der Kapillarröhrchen in einen vorbestimmten gegenseitigen Abstand und parallel zueinander und flach aufliegend auf der Oberfläche der Tragplatte auszurichten und mit dem dabei gleichzeitig aufgetragenen Füllschichtmaterial zu fixieren, so daß ein vorhergehender Schritt zur Ausrichtung und Fixierung der Kapillarröhrchen auf der Tragplatte entfällt. Die Maßnahmen gelten entsprechend auch für den Fall, daß die Heizmatte an beiden Enden Verteil- und Sammelrohre aufweisen.

Die Anschluß- oder Verbindungsrohre werden - zwar nicht zwingend, aberzweckmäßigerweise wie die Kapillarröhrchen nicht an den Enden, sondern am Umfang der Verteil- und Sammelrohre angeschlossen und in Nuten aufgenommen, die von der Quernut ausgehen und sich im Bereich zwischen der Quernut und der zunächstliegenden parallelen Kante der Tragplatte erstrecken, so daß wahlweise das Anschlußstück senkrecht zur Oberfläche der Tragplatte oder durch eine der Mündungen der Nuten an den Schmalseiten aus der Tragplatte herausgeführt werden kann.

Auf diese Weise bestehen verschiedene Anschlußmöglichkeiten in Abhängigkeit davon, ob die Heizmodulplatte als Wandplatte, Bodenplatte oder Deckenplatte verwendet wird.

Die Deckplatte ist wesentlich dünner als die Tragplatte. Eine Dicke bis zu etwa 10 mm ist ausreichend. Die Deckplatte wird durch die Tragplatte, mit der sie deckungsgleich ist, weitgehend getragen und braucht daher nur begrenzte Formstabilität und Festigkeit aufzuweisen. Das Material sollte eine ausreichende Wärmeleitfähigkeit aufweisen und für den Innenausbau sowohl von trockenen als auch von nassen Räumen geeignet sein. Sie soll auch helfen, Beschädigungen von außen normalerweise auszuschließen.

Bei der Lösung gemäß Anspruch 2 erfolgt die Montage der Kapillarrohr-Matten direkt auf der dem Rauminneren abgewandten Oberfläche einer Tafel aus einem wärmeleitenden Material. Es kann sich hierbei um das gleiche Material wie bei der Deckplatte der Lösung nach Anspruch 1 handeln. Die Matte wird ohne die Notwendigkeit einer Bearbeitung der Tafel auf dieser ausgerichtet und mit einem wärmeleitenden Binder oder Kleber festgelegt. Dieser sollte zumindestens die Kapillarröhrchen vollständig einhüllen, um so an der Wärmeüberleitung auf das Material der Tafel effektiv mitzuwirken. Der Binder oder Kleber kann Kalk und Gips und andere Zustzstoffe enthalten.

Die Tafel wird auf einen Rahmen, insb. aus einem Holzwerkstoff, befestigt und mit dessen Hilfe an der Wand oder Decke angebracht. Zur besseren Wärmedämmung gegenüber der Wand oder Decke kann das vom Rahmen umgebende Volumen mit einem Dämm-Material aufgefüllt und ggf. zur offenliegenden Seite hin abgedeckt werden.

Geeignet für die Deckplatte bzw. Tafel sind z.B. zement-, kalk- oder gipsgebundene Span- oder Faserplatten oder Platten aus Gipskarton.

Je nachdem, ob die Heizmodulplatte unter Putz verlegt werden soll oder zum Rauminneren die Sichtfläche bildet, kann die Oberfläche der Deckplatte oder der Tafel rauh (zum besseren Haften des Putzes), strukturiert oder glatt (tapezierbar, anstreichbar) ausgebildet sein.

Das Material der Füllschicht bzw. des Binders sollte ebenfalls eine ausreichende Wärmeleitfähigkeit aufweisen, da die Kapillarröhrchen in dem Füllschichtmaterial völlig oder nahezu völlig eingebettet sind. Das Material der Füllschicht sollte vorteilhafterweise Klebeeigenschaften aufweisen, so daß bei der Lösung nach Anspruch 1 die Deckplatte mit der Tragplatte durch Kleben fest und bleibend verbunden werden kann. Die Kleber sollen ölologischen und gesundheitlichen Anforderungen genügen.

Die Kapillarrohrheizmodulplatte kann in verschiedenen Abmessungen vorgefertigt sein. Zum Zusammensetzen kann die Tragplatte oder die Tafel an ihren Schmalseiten mit Nu-/Feder-Elementen ausgebildet sein.

Die Modulplatte ist außerordentlich stabil und bruchfest und läßt sich so leicht und ohne besondere Sorgfalt transportieren, lagern und montieren. Eine Beschädigung der Kapillarrohrheizmatten ist dabei nicht zu befürchten. Dennoch lassen sich Reparaturen bedarfsweise leicht ausführen, auch nach Einbau und nach langer Betriebszeit, indem im Bereich der Beschädigungsstelle das Material der Deckplatte bzw. der Tafel entfernt, das Kapillarröhrchen an der beschädigten Stelle durchschnitten und dicht verschweißt wird, also "verödet" wird.

Zweckmäßigerweise wird jede Modulplatte über ihre Verbindungsrohrstücke direkt an ein Verteilerrohrsystem angeschlossen, so daß die Aufgabe, benachbarte Kapillarrohrheizmatten direkt miteinander zu verbinden, entfällt. Das Verteilerrohrsystem kann in den Aufbauschichten z.B. eines Raumbodens unter der Lauffläche des Bodens verdeckt eingebaut sein. Die die Rohre aufnehmende Quernut der Tragplatte ist bei Verwendung der Modulplatte als Wandplatte im ausreichenden Abstand von der parallelen Plattenkante angeordnet, so daß die Nut im Einbauzustand in einem ausreichenden Sicherheitsabstand von der Lauffläche des Bodens zu liegen kommt.

Die Modulplatte kann durch Kleben, Schrauben, Nageln oder durch Einhängen mit entsprechend ausgebildeten Hakenelementen verlegt werden. Durch entsprechende Ergänzungsplattenelemente, in denen keine Kapillarrohrheizmatten eingebaut sind, können die Modulplatten an die Raumhöhe oder dgl. angepaßt werden.

Die Erfindung wird nachfolgend anhand schematischer Zeichnungen an einem Ausführungsbeispiel näher erläutert.

Es zeigen:
- Figur 1: in Draufsicht eine Kapillarrohrheizmatte auf einer zugehörigen Tragplatte vor Aufbringen des Füllschichtmaterials und der Deckplatte gemäß der Lehre des Anspruchs 1.
- Figur 2: in Seitenansicht eine Modulplatte als Wandplatte im Einbauzustand;
- Figur 3: in perspektivischer Ansicht, teilweise aufgebrochen, eine Modulplatte;
- Figur 4: im Ausschnitt einen Querschnitt durch die Modulplatte im Bereich der Quernut und
- Figur 5: im Ausschnitt einen Querschnitt durch eine Modulplatte gemäß der Lehre des Anspruchs 2.

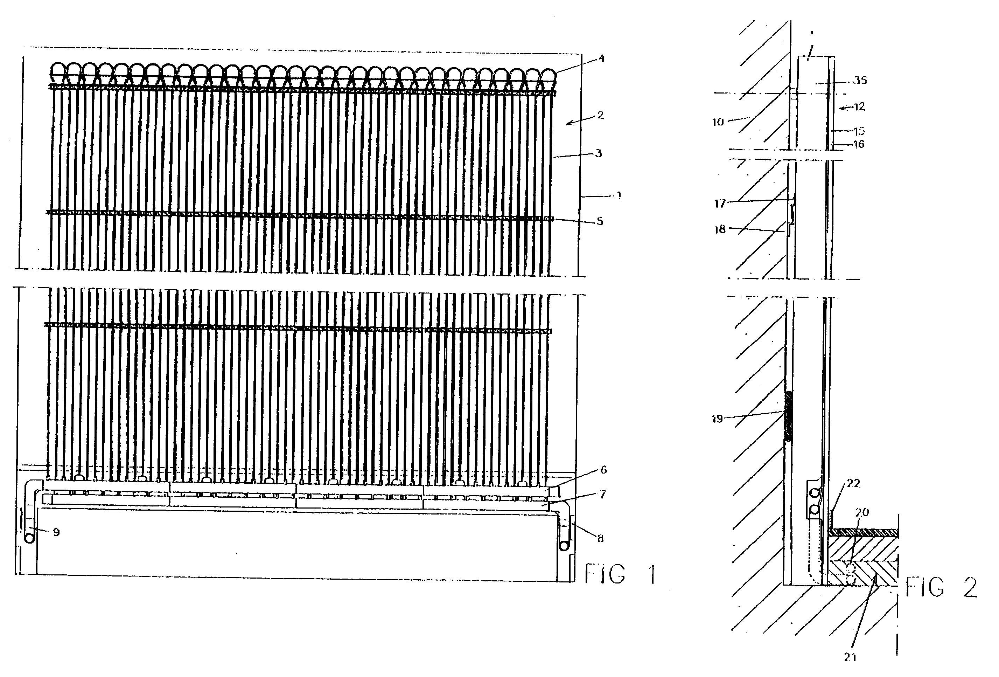

Figur 1 zeigt eine Kapillarrohrheizmatte 2, die auf einer Tragplatte montiert ist. Die Matte besteht aus Verteil- und Sammelrohren 6 und 7, die direkt an die Enden der einzelnen und parallel zueinander ausgerichteten Kapillarröhrchen 3 angeformt sind. Die Kapillarröhrchen weisen gleiche Länge auf und bilden an den von den Rohren 6 und 7 abgewandten Enden Schleifen 4. Die Rohre 6 und 7 sind zumindestens an einem Ende verschlossen und am gegenüberliegenden Ende mit Anschlußstücken 8 und 9 versehen.

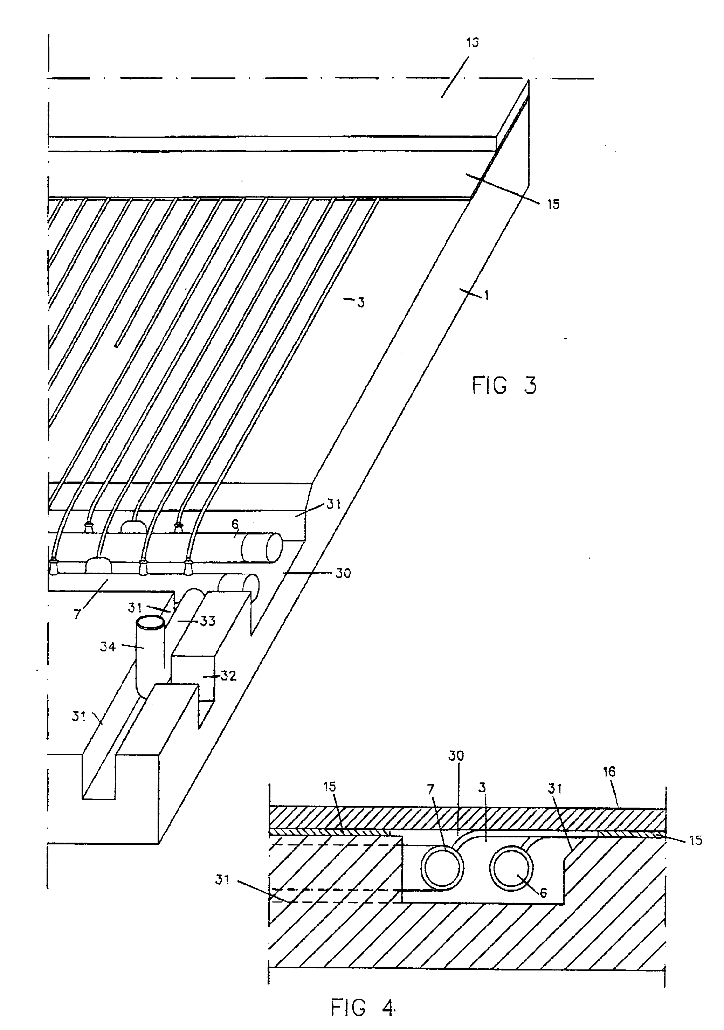

Wie aus Figur 3 und 4 hervorgeht, ist in der Tragplatte 1 in einem vorbestimmten Abstand von einer Schmalkante eine Quernut 31 eingearbeitet, in der die Sammel- und Verteilrohre 6 und 7 mit den Anschlußstellen der Kapillarröhrchen 3 vollständig aufgenommen sind. Von dort erstrecken sich die Kapillarröhrchen 3 und ihre Schleifen 4 auf der freien Oberfläche der Tragplatte 1. Sie können dort z.B. mit Hilfe von aufklippbaren Befestigungsleisten 5 fixiert sein. Bevorzugt wird jedoch die Lage der Kapillarröhrchen 3 auf der Oberfläche mit Hilfe des Materials 15 einer Füllschicht festgelegt, welche die Zwischenräume zwischen den Schenkeln der Kapillarröhrchen 3 und zwischen benachbarten Kapillarröhrchen praktisch vollständig ausfüllt, wie dies aus Figur 3 und 4 ersichtlich ist. Die Füllschicht 15 besteht aus einem wärmeleitfähigen Material mit Klebeeigenschaften, so daß eine mit der Tragplatte 1 deckungsgleiche Deckplatte 16 mit der Tragplatte fest und bleibend verklebt werden kann. Durch die Deckplatte 16 wird auch die Quernut 31 und werden die zur Aufnahme der Anschlußrohstücke 33, 34 vorgesehenen Nuten 31 ud 32 abgedeckt. Das Anschlußrohrstück 34 kann, wie in Figur 3 dargestellt, aus der Oberseite des Plattenmoduls austreten. Je nach Verwendungszweck der Modulplatte kann das Anschlußrohrstück 34 auch aus der Nut im Bereich der einen oder der anderen schmalseite der Tragplatte 1 herausgeführt sein.

Zweckmäßigerweise ist jede Tragplatte 1 wenigstens bereichsweise mit Nut- und Federelementen zum Anschließen von Modulplatten aneinander ausgerüstet.

Bei der Ausführung nach Figur 3 sind die Enden beider Rohre 6 und 7 verschlossen während die Anschlußstücke umfangsseitig an die Rohre angeschlossen sind. Man erkennt auch, daß die Länge der Rohre kleiner als die Breite der Tragplatte 1 ist.

Die Modulplatte kann als Wand-, Boden- und Deckenplatte verlegt werden. Zum Verlegen kann im Bereich des Randes der Modulplatte eine Schraub- oder Nagelreihe vorgesehen sein, wie bei 35 in Figur 2 angedeutet. Die Platten können auch auf eine vorher an der Mauer oder dgl. angebrachten Lattung montiert werden. Bevorzugt werden sie aber direkt auf die Rohwandfläche aufgebracht. Dies kann auch mit Hilfe von punkt- oder streifenförmig aufgebrachtem Kleber 19 erfolgen (Figur 2). Es können aber auch hakenförmige Klammerelemente an der Wand (bei 18) und an der Rückseite der Tragplatte (17) zum Einhängen der Platten bei der Montage verwendet werden. Die Montageart richtet sich unter anderem nach den Einbauverhältnissen und der Einbaulage (Wand, Boden oder Decke). Als Kleber eignen sich z.B. Kalk-Gipsmischungen.

Die Tragplatte kann für die verschieden bemessenen Heizplattenmodule gleich sein. Die Ausbildung der Deckplatte 16 (insb. ihrer Oberfläche) richtet sich nach der Verwendungsart, wie dies weiter oben schon angedeutet worden ist. Für den Boden werden Platten von ausreichender Flächenbelastung verwendet.

Bei Einbau als Wandelement, wie Figur 2 zeigt, liegt im Bodenbereich des Raumes eine Leitungsanordnung 20 eingebettet in den Bodenschichten 21. An die Leitungen der Anordnung 20 sind die Anschlußstücke 8 und 9 einer Heizmodulplatte einzeln und direkt angeschlossen. Man erkennt aus Figur 2, daß es zweckmäßig sein kann, die Quernut zur Aufnahme der Rohre 6 und 7 in einem ausreichenden Abstand von der Unterkante der Modulplatte anzuordnen, so daß keine Gefahr besteht, daß beim Annageln oder Anschrauben von Leisten 22 die Rohre 6 und 7 verletzt werden können.

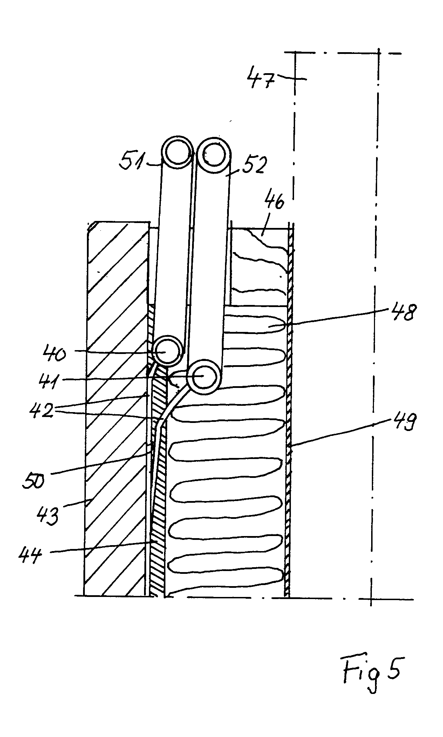

Bei der Ausführung nach Figur 5 ist eine Tafel 43 aus wärmeleitendem Werkstoff vorgesehen. Diese übernimmt die Aufgabe der Abdeckung 16 der Ausführungsform nach Figur 1 bis 4. Ihre eine Oberfläche ist entsprechend dem Rauminneren zugewandt und kann daher in ähnlicher Weise wie die Abdeckung 16 strukturiert oder dgl. sein. Der für die Tafel 43 verwendete Werkstoff kann der gleiche sein, wie der für die Deckplatte 16.

Auf der Rückseite dieser Tafel 43 wird die Kapillarrohrmasse entsprechend angeordnet. Diese besteht wiederum aus dicht beieinander und parallel zueinander verlaufenden Verteil- und Sammelrohren 40, 41, an welche die Enden der jeweils schlingenförmig gelegten Kapillaren 50 angeschlossen sind. An geeigneten Stellen der Verteil- und Sammelrohre sind, z.B. winkelförmig ausgebildete Anschlußstücke 51, 52 fest angebracht über deren freien Schenkel die Heizmatte an das Heizsystem angeschlossen werden kann. Dies kann über lösbare Steckkupplungen erfolgen, welche eine hinreichend feste und dichte Verbindung gewährleisten.

Zur Anwendung der Kapillarrohrheizmatte erfolgt keine Bearbeitung der Tafel 43. Die Fixierung der ausgerichteten Matte erfolgt mit Hilfe eines Binders oder Klebers, der so über die auf der Rückseite der Tafel 43 verteilt angeordneten Kapillarröhrchen 42 aufgestrichen wird, daß er zwischen den Röhrchen eine feste Verbindung der Rückseite der Tafel 43 eingeht unddie Kapillarröhrchen 42 praktisch vollständig einhüllt.

Der Kleber oder Binder besteht aus einem wärmeleitenden Werkstoff. Er kann zu diesem Zweck Kalk und Gips enthalten.

Der Bereich auf der Rückseite der Tafel 43, auf dem die Kapillarröhrchen 42 ausgebreitet sind, wird durch einen, vorzugsweise umfänglich geschlossenen, Rahmen 46 umgeben, der bevorzugt aus Holz oder einem holzartigen Kunststoff besteht. Er kann auch aus Kunststoff oder einem anderen Werkstoff hergestellt sein. Holz hat sich für den Rahmen jedoch besonders bewährt. Der Rahmen wird fest mit der Rückseite der Tafel 43 verbunden. In dem Bereich der Anschlußstücke 51,52 weist der Rahmen 46 eine Ausnehmung auf, durch die die Anschlußstücke nach außen ragen.

Die Verteil- und Sammelrohre 40,41 können mit Hilfe des Klebers an der Rückseite der Tafel 43 befestigt sein. Sie können auch zusätzlich oder alternativ dazu an dem zunächstliegenden Rahmenholz 46 angeheftet sein.

Der von dem Rahmen 46 umschlossene Raum kann zur besseren Wärmedämmung mit einem wärmedämmenden Material 48 ausgefüllt sein. Zur leichteren Handhabung der so gebildeten Modulplatte kann die Rückseite oder freiliegende Seite durch ein dünnes Material 49 abgedeckt sein. Dieses kann ein dünnes Sperrholz, eine Preßplatte, Pappe oder Blech oder dgl. sein.

Die so gebildete Modulplatte wird nach Art der Modulplatte nach Figur 1 bis 4 an der Mauer oder Decke 47 befestigt. Besteht die Abdeckung 49 aus Blech, so kann diese ausgeklinkte Abschnitte zur direkten Anbringung an der Wand oder Decke aufweisen.

Auf der Rückseite der Tafel 43 können auch Kerben vorgesehen sein, die bei der Montage den Kapillarröhrchen eine Ausrichtung geben können.

## Patentansprüche

1. Kapillarrohr-Heizanordnung, bestehend aus an eine Verteilerrohranordnung anschließbare Kapillarrohr-Heizmatten, die jeweils aus einem Verteilerrohr und einem dazu parallelen Sammelrohr an wenigstens einem Ende sowie aus mit ihren Enden jeweils von diesen beiden Rohren ausgehenden Kapillarröhrchen bestehen, deren Schenkel in einem vorbestimmten Abstand etwa parallel zueinander verlaufen, dadurch **gekennzeichnet**, daß Verteilerrohr (6) und Sammelrohr (7) jeweils in eine im Abstand von einer Kante einer selbsttragenden, formbeständigen Tragplatte (1) aus einem leicht bearbeitbaren Werkstoff von geringem Gewicht und guter Wärmedämmung vorgesehenen Quernut (30) eingebettet und die Kapillarröhrchen (3) auf der dem Rauminneren zugewandten Oberfläche der Tragplatte (1) ausgerichtet angeordnet und mit einer die Zwischenräume zwischen den Kapillarröhrchen (3) ausfüllenden Füllschicht (15) aus einem Material mit wärmeleitenden Eigenschaften festgelegt und raumseitig durch eine gegenüber der Tragplatte (1) dünnere Deckplatte (16) aus einem leichten und wärmeleitenden Werkstoff ganzflächig abgedeckt sind.

2. Kapillarrohr-Heizanordnung, bestehend aus an eine Verteilerrohranordnung anschließbare Kapillarrohr-Heizmatten, die jeweils aus einem Verteilerrohr und einem dazu parallelen Sammelrohr an wenigstens einem Ende sowie aus mit ihren Enden jeweils von diesen beiden Rohren ausgehenden Kapillarröhrchen bestehen, deren Schenkel in einem vorbestimmten Abstand etwa parallel zueinander verlaufen, dadurch **gekennzeichnet**, daß Verteilerrohr (40) und Sammelrohr (41) sowie die Kapillarröhrchen (42) auf der von dem Rauminneren abgewandten Oberfläche (50) einer aus einem wärmeleitenden Werkstoff bestehenden Tafel (43) ausgerichtet angeordnet und mittels eines wenigstens die Kapillarröhrchen (42) einbettenden Klebers (44) aus wärmeleitendem Werkstoff festgelegt sind, und daß die Tafel (43) mittels eines die Kapillorrohr-Heizmatte umschließenden Rahmen (46) an der Wand (47) oder der Decke befestigbar ist.

3. Kapillarrohr-Heizanordnung nach Anspruch 2, dadurch **gekennzeichnet**, daß der durch den Rahmen (46) begrenzte Raum auf der Tafelrückseite mit Dämm-Material (48) ausgefüllt und auf der freiliegenden Seite abgedeckt (49) ist.

4. Kapillarrohr-Heizanordnung nach Anspruch 1, dadurch **gekennzeichnet**, daß die Tragplatte (1) und die Deckplatte (16) deckungsgleich ausgebildet und mit Hilfe der Füllschicht (15) bleibend miteinander verklebt sind.

5. Kapillarrohr-Heizanordnung nach Anspruch 1 oder 4, dadurch **gekennzeichnet**, daß die Tragplatte (1) von der in Richtung auf das Rauminnere offenen Quernut (30) ausgehende Nuten (31,32) zur Aufnahme von Rohranschlußstücken (33,34) zum Anschluß an die Verteilerrohranordnung (20) im Bereich zwischen der Quernut (30) und der zu dieser am nächsten liegenden und dazu parallelen Kante der Tragplatte (1) vorgesehen sind.

6. Kapillarrohr-Heizonordnung nach einem der Ansprüche 1, 4 oder 5, dadurch **gekennzeichnet**, daß die Tragplatte (1) durch Kleben (19), Nageln, Schrauben (35) und/oder Einhängen (17,18) an Wänden, Böden oder Decken anbringbar sind.

7. Kapillarrohr-Heizanordnung nach Anspruch 1, dadurch **gekennzeichnet**, daß die Tragplatte (1) an ihren Schmalkanten mit Nut/Feder-Elementen versehen sind.

8. Kapillarrohr-Heizanordnung nach Anspruch 1, dadurch **gekennzeichnet**, daß die Tragplatte (1) aus Holzspan- oder Holzfaser Material oder dgl. Material besteht.

9. Kapillarrohr-Heizanordnung nach einem der voranstehenden Ansprüche, dadurch **gekennzeichnet**, daß die Deckplatte (16) bzw. die Tafel (43) aus einem der Materialien: zementgebundenen oder gipsgebundenen Faser- oder Spanmaterial oder aus Gipskarton oder dergleichen besteht.

10. Kapillarrohr-Heizanordnung nach Anspruch 2, dadurch **gekennzeichnet**, daß der Kleber Kalk und Gips enthält.

## Claims

1. A capillary-tube heating arrangement, comprising capillary-tube heating mats which are connectable to a distributing-pipe arrangement and which each comprise a distributing pipe and a collecting pipe parallel thereto at one end at least, as well as capillary tubes whose ends lead off from each of these two pipes and whose branches extend approximately parallel to one another at a predetermined spacing, **characterised in that** the distributing pipe (6) and the collecting pipe (7) are each embedded in a transverse groove (30) provided at a spacing from one edge of a self-supporting, dimensionally stable supporting plate (1) made of an easily workable, light-weight material with good heat insulation, and the capillary tubes (3) are arranged in alignment on the surface of the supporting plate (1) facing the inside of the room, are secured in position with a filling layer (15) made of a material with heat-conducting properties filling the spaces between the capillary tubes (3), and - on the side nearest the room - are covered over their entire surface by a cover plate (16) which is thinner than the supporting plate (1) and is made of a light and heat-conducting material.

2. A capillary-tube heating arrangement, comprising capillary-tube heating mats which are connectable to a distributing-pipe arrangement and which each comprise a distributing pipe and a collecting pipe parallel thereto at one end at least, as well as capillary tubes whose ends lead off from each of these two pipes and whose branches extend approximately parallel to one another at a predetermined spacing, **characterised in that** the distributing pipe (40) and the collecting pipe (41 ) as well as the capillary tubes (42) are arranged in alignment on the surface (50) - facing away from the inside of the room - of a panel (43) made of a heat-conducting material, and are secured in position by means of an adhesive (44) made of heat-conducting material embedding the capillary tubes (42) at least, and in that the panel (43) is attachable to the wall (47) or the ceiling by means of a frame (46) enclosing the capillary-tube heating mat.

3. A capillary-tube heating arrangement according to Claim 2, **characterised in that** the space on the rear side of the panel, which space is delimited by the frame (46), is filled with insulating material (48) and is covered (49) on the free side.

4. A capillary-tube heating arrangement according to Claim 1, **characterised in that** the supporting plate (1) and the cover plate (16) are congruent in form and are stuck together permanently with the aid of the filling layer (15).

5. A capillary-tube heating arrangement according to Claim 1 or 4, **characterised in that** the supporting plate (1) has grooves (31, 32) leading off from the transverse groove (30), which is open towards the inside of the room, these grooves (31, 32) being designed to receive pipe connection pieces (33, 34) for attachment to the distributing-pipe arrangement (20) in the region between the transverse groove (30) and the nearest parallel edge of the supporting plate (1).

6. A capillary-tube heating arrangement according to any one of Claims 1, 4 or 5, **characterised in that** the supporting plate (1) can be mounted on walls, floors or ceilings by sticking (19), nailing, screwing (35) and/or hanging (17, 18).

7. A capillary-tube heating arrangement according to Claim 1, **characterised in that** the narrow edges of the supporting plate (1) are provided with groove/spring elements.

8. A capillary-tube heating arrangement according to Claim 1, **characterised in that** the supporting plate (1) consists of a material made from wood chips or wood fibres, or a similar material.

9. A capillary-tube heating arrangement according to any one of the preceding claims, **characterised in that** the cover plate (16) and/or the panel (43) comprises one of the following materials: cement-bound or plaster-bound fibre or chip material, plaster board or the like.

10. A capillary-tube heating arrangement according to Claim 2, **characterised in that** the adhesive contains lime and plaster.

## Revendications

1. Dispositif de chauffage à tubes capillaires, constitué de mats chauffants de tubes capillaires qui peuvent être raccordés à une tuyauterie de distribution et qui sont chacun constitués d'un tuyau distributeur et d'un tuyau collecteur, parallèle au tuyau distributeur, à au moins une extrémité, ainsi que de tubes capillaires dont les extrémités partent respectivement de ces deux tuyaux et dont les branches s'étendant approximativement parallèlement entre elles, à un écartement prédéterminé, **caractérisé** en ce que le tuyau distributeur (6) et le tuyau collecteur (7) sont respectivement encastrés dans une rainure transversale (30) prévue à distance d'un bord d'une plaque de support (1) autoporteuse, dimensionnellement stable, réalisée en un matériau facile à faconner, de faible poids et bon isolant thermique, et les tubes capillaires (3) sont disposés en alignement sur la surface de la plaque de support (1) tournée vers l'intérieur du local, sont fixés en position par une couche de remplissage (15), remplissant les espaces intermédiaires entre les tubes capillaires (3) et réalisée en un matériau thermoconducteur, et sont recouverts sur toute leur surface, du côté du local, par une plaque de recouvrement (16), plus mince que la plaque de support (1) et réalisée en un matériau léger et thermoconducteur.

2. Dispositif de chauffage à tubes capillaires, constitué de mats chauffants de tubes capillaires qui peuvent être raccordés à une tuyauterie de distribution et qui sont chacun constitués d'un tuyau distributeur et d'un tuyau collecteur, parallèle au tuyau distributeur, à au moins une extrémité, ainsi que de tubes capillaires dont les extrémités partent respectivement de ces deux tuyaux et dont les branches s'étendant approximativement parallèlement entre elles, à un écartement prédéterminé, **caractérisé** en ce que le tuyau distributeur (40) et le tuyau collecteur (41), ainsi que les tubes capillaires (42), sont disposés en alignement sur la surface (50), opposée à l'intérieur du local, d'un panneau (43) réalisé en un matériau thermoconducteur, et sont fixés en position au moyen d'un produit adhésif (44), constitué d'un matériau thermoconducteur et enrobant au moins les tubes capillaires (42), et en ce que le panneau (43) peut être fixé au mur (47), ou au plafond, à l'aide d'un cadre (46) entourant le mat chauffant de tubes capillaires.

3. Dispositif de chauffage à tubes capillaires selon la revendication 2, **caractérisé** en ce que l'espace délimité par le cadre (46) est rempli de matériau isolant (48) sur le côté arrière du panneau, et est recouvert (49) sur le côté à nu.

4. Dispositif de chauffage à tubes capillaires selon la revendication 1, **caractérisé** en ce que la plaque de support (1) et la plaque de recouvrement (16) sont réalisées coïncidentes, et sont mutuellement assemblées par collage, de manière durable, à l'aide de la couche de remplissage (15).

5. Dispositif de chauffage à tubes capillaires selon la revendication 1 ou 4, **caractérisé** en ce que sont prévues, dans la plaque de support (1), des rainures (31, 32) destinées à recevoir des tubulures de raccordement (33, 34) pour le raccordement à la tuyauterie de distribution (21), rainures qui partent de la rainure transversale (30), ouverte en direction de l'intérieur du local, et qui s'étendent dans la région comprise entre la rainure transversale (30) et le bord de la plaque de support (1) qui en est le plus proche et lui est parallèle.

6. Dispositif de chauffage à tubes capillaires selon l'une quelconque des revendications 1, 4 ou 5, **caractérisé** en ce que les plaques de support (1) peuvent être fixées sur des murs, des planchers ou des plafonds par collage (19), clouage, vissage (35) et/ou accrochage (17, 18).

7. Dispositif de chauffage à tubes capillaires selon la revendication 1, **caractérisé** en ce que les plaques de support (1) sont pourvues, sur leurs bords étroits, d'éléments d'assemblage par rainure et languette.

8. Dispositif de chauffage à tubes capillaires selon la revendication 1, **caractérisé** en ce que la plaque de support (1) est constituée d'un panneau de fibres de bois ou de particules, ou autre matériau similaire.

9. Dispositif de chauffage à tubes capillaires selon l'une quelconque des revendications précédentes, **caractérisé** en ce que la plaque de recouvrement (16), ou le panneau (43), est constitué(e) d'un des matériaux suivants : panneau de fibres ou de particules lié à du plâtre ou du ciment, ou placoplâtre, ou autre matériau similaire.

10. Dispositif de chauffage à tubes capillaires selon la revendication 2, **caractérisé** en ce que le produit adhésif contient de la chaux et du plâtre.
